# EUROPEAN PATENT SPECIFICATION

(11) **EP 3 457 278 B1**
(45) Date of publication and mention of the grant of the patent: **30.06.2021**
(21) Application number: 17795491.4
(22) Date of filing: 05.05.2017
(51) Int. Cl.: G06F 9/46, H04L 29/08

(54) **DISTRIBUTED PROCESSING SYSTEM, DATA PROCESSING METHOD, AND CONTROL NODE APPARATUS**
SYSTEM ZUR VERTEILEN VERARBEITUNG, DATENVERARBEITUNGSVERFAHREN UND STEUERKNOTENVORRICHTUNG
SYSTÈME DE TRAITEMENT DISTRIBUÉ, PROCÉDÉ DE TRAITEMENT DE DONNÉES, ET APPAREIL DE NOEUD DE COMMANDE

(30) Priority: 09.05.2016 CN 201610303417
(43) Date of publication of application: 20.03.2019
(73) Proprietor: Tencent Technology (Shenzhen) Company Limited, Shenzhen, Guangdong 518057 (CN)
(72) Inventor: MA, Jingbo, Shenzhen, Guangdong 518057 (CN); PEI, Zeliang, Shenzhen, Guangdong 518057 (CN)
(74) Representative: EP&C
(86) International application number: PCT/CN2017/083171
(87) International publication number: WO 2017/193873

(56) References cited:
- CN-A- 102 360 310
- CN-A- 102 904 919
- CN-A- 103 455 633
- CN-A- 103 973 803
- US-A1- 2004 063 405
- US-A1- 2009 252 175

## Description

This application claims priority to Chinese Patent Application No. 201610303417.4, titled "DISTRIBUTED PROCESSING SYSTEM, DATA PROCESSING METHOD, AND DEVICE" filed with the Chinese Patent Office on May 9, 2016. The features of the preamble of the independent claims are known from US20090252175A1. Related technologies are known from US20040063405A1, CN102904919A and CN103973803A.

### FIELD OF THE TECHNOLOGY

The present disclosure relates to the field of computer technologies, and specifically relates to a distributed processing system, a data processing method, and a control node device.

### BACKGROUND OF THE DISCLOSURE

In massive data processing, a dimension is an attribute of a monitored object, and may include a region, an equipment room, or an operator, or may include an interface and an error code, or the like.

A characteristic is an index corresponding to one dimension or a combination of multiple dimensions.

A characteristic tree may refers to a piece of directed graph formed by all monitored objects and relationships therebetween involved in a process in which monitored objects having a finer monitor granularity are aggregated layer by layer to a monitored object having a coarser granularity according to different rules and a service requirement.

Calculation of the characteristic tree may refers to a processing process of aggregating, layer by layer, lower-layer characteristic data of the characteristic tree to upper-lower characteristic data in different manners, such as obtaining the sum, or the average, or the quotient, within one minute.

In the conventional art, a characteristic data processing process may include pre-generating multiple characteristic trees by a single machine using all characteristic data, and then performs calculations by regarding the plurality of characteristic trees each as a single unit. This solution may suffers from, for example, long processing durations, limited performance of a single machine and a low characteristic update speed.

### SUMMARY

The present invention is defined in the independent claims, and the preferable features according to the present invention are defined in the independent claims.

To address the issues of the characteristic tree processing solution in the conventional art of long processing durations and limited performance of a single machine, embodiments in the present disclosure provide a distributed processing system, a data processing method, and a control node device. In a distributed processing manner, calculation of characteristic data can be implemented without constructing a characteristic tree, thereby reducing the processing duration. In addition, the characteristic tree does not need to be placed on a single machine for processing, thereby addressing the issue of limited performance of a single machine.

A first aspect of the present disclosure provides a distributed processing system, including a control node, a first computing node, and a second computing node, where the first computing node is configured to process characteristic data reported by a terminal and characteristic data allocated by the control node, and the second computing node is configured to process characteristic data generated by the first computing node and the characteristic data allocated by the control node; where
the control node obtains a type and a characteristic identifier of to-be-processed characteristic data, where the type is for identifying a home computing node of the to-be-processed characteristic data, and the home computing node is one of the first computing node and the second computing node;
the control node determines process index information according to the characteristic identifier, and the process index information is for indicating a processing process on the home computing node to which the to-be-processed characteristic data belongs;
the control node schedules, according to the process index information, one of data index information of the to-be-processed characteristic data and the to-be-processed characteristic data to the processing process on the home computing node, and the data index information is for instructing the home computing node to obtain the to-be-processed characteristic data; and
the home computing node processes the to-be-processed characteristic data to obtain processed characteristic data.

A second aspect of the present disclosure provides a data processing method, where the method includes:
obtaining, by a control node, a type and a characteristic identifier of to-be-processed characteristic data, where the type is for identifying a home computing node of the to-be-processed characteristic data, the home computing node is one of a first computing node and a second computing node, where the first computing node is configured to process characteristic data reported by a terminal and characteristic data allocated by the control node, and the second computing node is configured to process characteristic data generated by the first computing node and the characteristic data allocated by the control node;
determining, by the control node, process index information according to the characteristic identifier, where the process index information is for indicating a processing process on the home computing node to which the to-be-processed characteristic data belongs;
scheduling, by the control node according to the process index information, one of data index information of the to-be-processed characteristic data and the to-be-processed characteristic data to the processing process on the home computing node, where the data index information is for instructing the home computing node to obtain the to-be-processed characteristic data; and
   processing, by the home computing node, the to-be-processed characteristic data to obtain processed characteristic data.

A third aspect of the present disclosure provides a control node device, where the control node device includes:
an obtaining unit, configured to obtain a type and a characteristic identifier of to-be-processed characteristic data, where the type is for identifying a home computing node of the to-be-processed characteristic data, the home computing node is one of a first computing node and a second computing node, the first computing node is configured to process characteristic data reported by a terminal and characteristic data allocated by a control node, and the second computing node is configured to process characteristic data generated by the first computing node and the characteristic data allocated by the control node;
a determining unit, configured to determine process index information according to the characteristic identifier obtained by the obtaining unit, where the process index information is for indicating a processing process on the home computing node to which the to-be-processed characteristic data belongs; and
a scheduling unit, configured to schedule, according to the process index information, one of data index information of the to-be-processed characteristic data and the to-be-processed characteristic data to the processing process on the home computing node, where the data index information is for instructing the home computing node to obtain the to-be-processed characteristic data, so that the home computing node processes the to-be-processed characteristic data to obtain processed characteristic data.

Compared with the characteristic tree processing solution in the conventional art that suffers from long processing durations and limited performance of a single machine, the distributed processing system, the data processing method, and the control node device provided in the embodiments in the present disclosure adopt a distributed processing manner, in which calculation of characteristic data can be implemented without constructing a characteristic tree, thereby reducing the processing duration. In addition, the characteristic tree does not need to be placed on a single machine for processing, thereby addressing the issue of limited performance of a single machine.

### BRIEF DESCRIPTION OF THE DRAWINGS

To describe the technical solutions in the embodiments in the present disclosure more clearly, the following briefly describes the accompanying drawings required for describing the embodiments. Apparently, the accompanying drawings in the following description show merely some embodiments in the present disclosure, and a person skilled in the art may derive other drawings from these accompanying drawings without creative efforts.
FIG. 1 is a schematic diagram of an embodiment of a distributed processing system according to an embodiment in the present disclosure;
FIG. 2 is a schematic diagram of an example of processing characteristic data by using a distributed processing system according to an embodiment in the present disclosure;
FIG. 3 is a schematic diagram of a data storage structure according to an embodiment in the present disclosure;
FIG. 4 is a schematic diagram of an embodiment of a data processing method according to an embodiment in the present disclosure;
FIG. 5 is a schematic diagram of an embodiment of a control node device according to an embodiment in the present disclosure; and
FIG. 6 is a schematic diagram of another embodiment of a control node device according to an embodiment in the present disclosure.

### DESCRIPTION OF EMBODIMENTS

The embodiments in the present disclosure provide a distributed processing system, a data processing method, and a device. In a distributed processing manner, calculation of characteristic data can be implemented without constructing a characteristic tree, thereby reducing the processing duration. In addition, the characteristic tree does not need to be placed on a single machine for processing, thereby addressing the issue of limited performance of a single machine. Detailed descriptions are provided below.

The following clearly and completely describes the technical solutions in the embodiments in the present disclosure with reference to the accompanying drawings in the embodiments in the present disclosure. Apparently, the described embodiments are merely some but not all of the embodiments. All other embodiments obtained by a person skilled in the art based on the embodiments in the present disclosure without creative efforts shall fall within the protection scope of the present disclosure.

First, technical terms used in the present disclosure are described:
Dimension: An attribute of a monitored object, and may include a region, an equipment room, or an operator, or may include an interface and an error code, or the like.
Characteristic: An index corresponding to one dimension or a combination of multiple dimensions, and is for monitoring a data organization manner in a system, and is a monitored object including a characteristic value and characteristic information, where the characteristic value is, for example, a set of 1440 points per day.
Single-machine characteristic: A monitored object having the finest granularity in a system, and is for identifying characteristic data reported by a single machine.
Simple characteristic: Data obtained by compounding, according to a specified rule, same characteristics (single-machine characteristics) reported by multiple machines.
Compound characteristic: Data obtained by compounding, according to a specified rule, multiple simple characteristics or multiple compound characteristics.
Configuration update system: A distributed cooperative system supporting storage and pulling of massive data and real-time sending of a data update notification to a module having a subscription request.

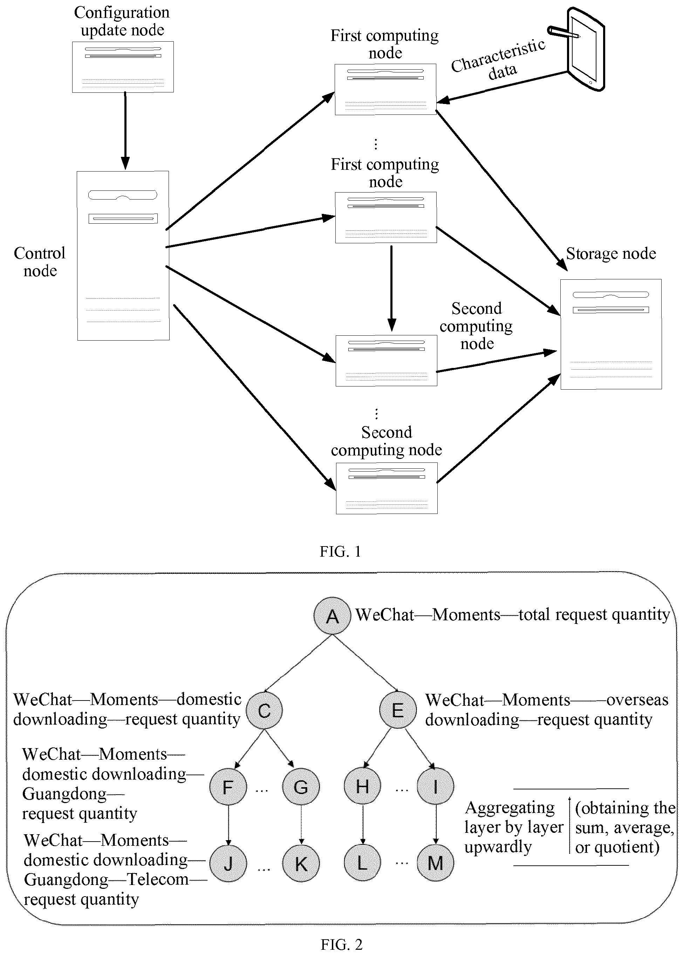

Referring to FIG. 1, a distributed processing system provided in an embodiment in the present disclosure includes a control node, a first computing node, and a second computing node. There may be multiple first computing nodes and second computing nodes. The first computing node is configured to process characteristic data reported by a terminal and characteristic data allocated by the control node, and the second computing node is configured to process characteristic data generated by the first computing node and the characteristic data allocated by the control node. That is, the characteristic data reported by the terminal is equivalent to single-machine characteristic data, and is directly processed by the first computing node. Simple characteristic data may be obtained after the processing. The first computing node may further transmit the simple characteristic data to the second computing node for further processing. Compound characteristic data is obtained after the simple characteristic data is processed by the second computing node. The second computing node may subscribe for content of the first computing node, so that after obtaining the simple characteristic data by calculation, the first computing node transmits the simple characteristic data to the corresponding second computing node according to a subscription from the second computing node.

The control node is a control center in the distributed processing system in the present disclosure, and may receive in time, in a case that a configuration update node monitors that to-be-processed characteristic data is updated, updated characteristic information. The updated characteristic information may include a type and a characteristic identifier of the to-be-processed characteristic data. The type of the to-be-processed characteristic data is for identifying a home computing node of the to-be-processed characteristic data. That is, in the present disclosure, the characteristic data on the control node may be divided into two types: simple characteristic data and compound characteristic data. If the type indicates that the to-be-processed characteristic data belongs to the simple characteristic data, it can be determined that the to-be-processed characteristic data is to be processed by the first computing node. If the type indicates that the to-be-processed characteristic data belongs to the compound characteristic data, it can be determined that the to-be-processed characteristic data is to be processed by the second computing node. In fact, multiple characteristic processing processes runs on each first computing node and each second computing node. Characteristic data processed in each process may be different. Therefore, process index information may be determined according to the characteristic identifier of the to-be-processed characteristic data. Specifically, there is a correspondence between the characteristic identifier and the process index information. Therefore, the process of determining process index information according to the characteristic identifier of the to-be-processed characteristic data may include determining the process index information corresponding to the characteristic identifier of the to-be-processed characteristic data according to the correspondence. Optionally, the process index information corresponding to the characteristic identifier may be calculated according to the characteristic identifier of the to-be-processed characteristic data by using a consistent hashing algorithm. The process index information is for indicating a processing process on the home computing node to which the to-be-processed characteristic data belongs. Routing information of the to-be-processed characteristic data or the data index information may be determined according to the process index information. In other words, a process to which the data index information or the to-be-processed characteristic data should be scheduled may be determined.

The control node schedules, according to the process index information, data index information of the to-be-processed characteristic data or the to-be-processed characteristic data to the processing process on the home computing node, and the data index information is for instructing the home computing node to obtain the to-be-processed characteristic data.

The home computing node processes the to-be-processed characteristic data to obtain processed characteristic data.

The control node receives, in a case that the configuration update node monitors that the characteristic data is updated, the type and the characteristic identifier of the to-be-processed characteristic data that are reported by the configuration update node.

Alternatively, in a case of determining that a process on the first computing node or the second computing node is abnormal, the control nodes obtains a type and a characteristic identifier of characteristic data processed in the abnormal process, as the type and the characteristic identifier of the to-be-processed characteristic data.

In fact, the main principle of the distributed processing system in the present disclosure is to divide all characteristics in the system into a simple type and a compound type. A rule of distributing the to-be-processed characteristic data is configured on the control node. The distribution rule specifies a process of determining a process to which the characteristic data belongs. For example, the characteristics in the system may be divided into two types: simple characteristics and compound characteristics. A single-machine characteristic is a subset of the simple characteristics. The simple characteristics are calculated directly according to data reported by a user. The compound characteristics are calculated directly according to the simple characteristics or other compound characteristics.

First, a calculation node for calculating the to-be-processed characteristic data is determined according to a characteristic type. That is, it is determined that whether the to-be-processed characteristic data is calculated by the first computing node or the second computing node.

Then, process index information of a routing table corresponding to the characteristic identifier can be obtained by solving a distribution function F. A solving process may be: x1=F1(X1), ..., xn=Fn(Xn), where XI, ...Xn represent characteristic identifiers. The process index information x1, ...xn are obtained by solving the distribution function F.

Corresponding routing information is searched for according to the process index information of the routing table corresponding to the characteristic identifier, where r1=R1(x1), r2=R2(x2), ...rn=Rn(xn). Finally, characteristics are scheduled to a corresponding process on a corresponding calculation node in real time according to the obtained routing information.

After determining the process to which the to-be-processed characteristic data should be scheduled, the control node schedules the data index information of the to-be-processed characteristic data or the to-be-processed characteristic data to the corresponding process for calculation.

The second computing node subscribes, in each minute, for a characteristic required for calculation performed by itself from the first computing node or another second computing node. In a case that the data reported by the user reaches the first computing node and the first computing node finishes the calculation, the first computing node pushes the data to a corresponding second computing node according toa subscription from the second computing node. When simple characteristic data or compound characteristic data for calculating each compound characteristic reaches the second computing node, the second computing node starts to calculate the compound characteristic data. The process is repeated in every minute. In a case that a quantity of characteristics increases, a quantity of machines will also increase.

The process of calculating characteristic data by the first computing node is a simple characteristic calculation, and the process of calculating characteristic data by the second computing node is a compound characteristic calculation.
1) Simple characteristic calculation: S([Sx1, Sx2, ...Sxn])=>[S1, S2, ...Sn], where S is a simple characteristic calculation function, and S1, S2, ...Sn are characteristic values calculated for each simple characteristic within a time period.
2) Compound calculation:
   C([S1, S2, ...Sn])=>[C1, C2, ...Cn] or C([C1, C2, ...Cn])=>[C1', C2', ...Cn']

Where C is a compound characteristic calculate function, C1, C2, ...Cn are compound characteristic values obtained through calculation according to multiple simple characteristic values, and C1', C2', ...Cn' are current compound characteristic values obtained through calculation according to the compound characteristic values.

For ease of understanding, the foregoing process is described by using an example with reference to FIG. 2.

An example in which the characteristic data is a WeChat-Moments-request quantity is used. To count the WeChat-Moments-request quantity, a WeChat-Moments-request quantity of China Mobile users, a WeChat-Moments-request quantity of China Unicom users, and a WeChat-Moments-request quantity of China Telecom users in each province of each nation may be counted first. These characteristic data are simple characteristic data, and can be obtained by calculating a sum. A WeChat-Moments-request quantity of China Mobile users in Guangdong province is taken as an example for description. The example may be that a quantity of China Mobile users sending a Moments request is scheduled to a process on the first computing node for counting. Likewise, a WeChat-Moments-request quantity of China Unicom users in Guangdong province and a WeChat-Moments-request quantity of China Telecom users in Guangdong province may be counted by using another two processes respectively. Certainly, such numerical values for another province may be calculated by using another process. Then, the simple characteristic data is sent to a corresponding process that is on the second computing node and that is for calculating a WeChat-Moments-request quantity in domestic provinces. In this way, domestic data can be calculated. Characteristic data of oversea countries may also be processed by the foregoing method, and a global WeChat-Moments-request quantity can be finally determined.

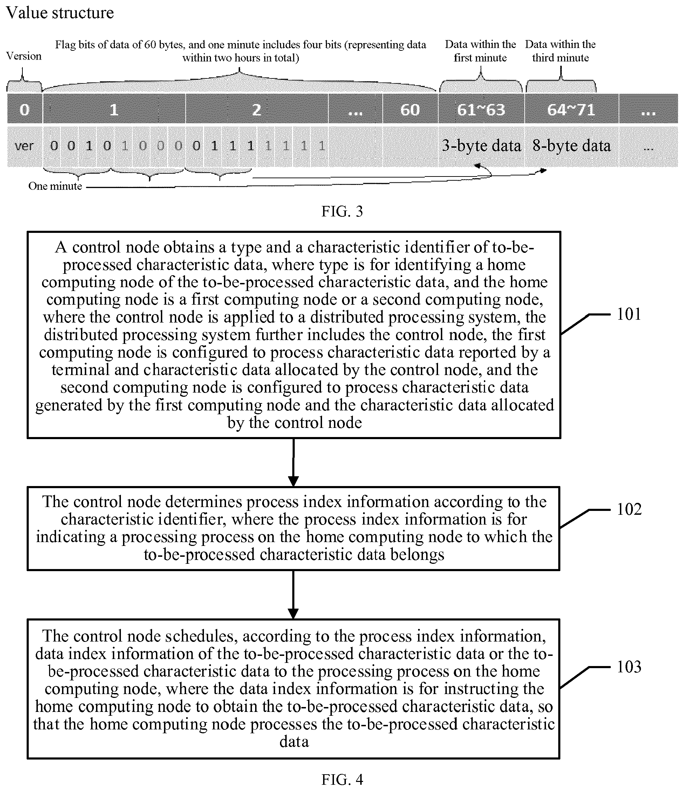

In the present disclosure, the characteristic data needs to be stored after being processed. A storage format provided in the present disclosure adopts a value structure. The value structure is version number + bitmap identifier + dynamic data content. For details of the format, reference is made to FIG. 3 for understanding.

As shown in FIG. 3, the "ver" at 0 byte represents a version number, for example, 1.0. In the following 60 bytes, the first to the sixtieth bytes are bitmap flag bits, and each four bits represents data within one minute. For details of the bitmap flag bits, reference is made to Table 1. One value can store data within two hours.

**Table 1: Description of a bitmap flag bit structure**

| Bit | | | | Description |
|---|---|---|---|---|
| 1 | 0 | 0 | 0 | 0 value |
| 1 | 0 | 0 | 1 | reserve |
| 1 | 0 | 1 | 0 | reserve |
| 1 | 0 | 1 | 1 | reserve |
| 1 | 1 | 0 | 0 | reserve |
| 1 | 1 | 0 | 1 | reserve |
| 1 | 1 | 1 | 0 | -2 (not calculated) |
| 1 | 1 | 1 | 1 | -1 (not reported) |
| 0 | 0 | 0 | 0 | 1-byte data |
| 0 | 0 | 0 | 1 | 2-byte data |
| 0 | 0 | 1 | 0 | 3-byte data |
| 0 | 0 | 1 | 1 | 4-byte data |
| 0 | 1 | 0 | 0 | 5-byte data |
| 0 | 1 | 0 | 1 | 6-byte data |
| 0 | 1 | 1 | 0 | 7-byte data |
| 0 | 1 | 1 | 1 | 8-byte data |

It can be learned from Table 1 that, a real size of data can be stored only in a case that the characteristic data is greater than 0, and a quantity of bytes stored is determined by an actual quantity of bytes the data has. For example, 32 may be represented by one byte, so that one byte is stored.

In addition, in the present disclosure, an ANM compression algorithm may be used, and a compression efficiency may be improved. Table 2 is a comparison among indicators of three types of compression algorithms.

**Table 2: Compression efficiency comparison**

| Compression manner | Quantity of data (B) | Compression duration (S) | Decompression duration (S) | Compression rate (%) |
|---|---|---|---|---|
| ANM | 166125^{∗}1440^{∗}8 | 3.113 | 2.157 | 83.5 |
| Snappy | 166125^{∗}1440^{∗}8 | 7.724 | 2.798 | 82 |
| Zlib | 166125^{∗}1440^{∗}8 | 69.356 | 8.122 | 92 |

It can be learned from Table 2 that, in a case that a same quantity of data is to be compressed, compression duration and decompression duration by using the ANM compression algorithm in the present disclosure are the shortest, and the compression efficiency is much higher than that of the zlib manner in which the compression duration is 69.356.

The ANM compression algorithm, the snappy compression algorithm, and the zlib compression algorithm in Table 2 are three types of data compression algorithms. However, the compression algorithm in the present disclosure is not limited thereto.

The configuration update node in FIG. 1 mainly provides rapid pulling, subscription and notification of massive data. The control node subscribes for an update notification on the configuration update node. The configuration update node can notify the control node within a second in response to any modification in hundreds of millions of data. In a case that the control node only pushes the data index information to the first computing node and the second computing node, specific characteristic data needs to be pulled in real time from the configuration update node.

The control node is a control center for the entire real-time calculation, and is configured to push full data index information or a part of updated characteristic data to a specified calculation node. A pushed router may determine a corresponding calculation process by using the consistent hashing algorithm. In a case that the first computing node and the second computing node are abnormal, the control node senses the case within 30S, and evenly distributes characteristic data in an abnormal process to other processes, to ensure that the data is recovered within one minute.

The first computing node is configured to: synthesize a simple characteristic from single-machine characteristics, where the calculation is driven by the characteristic data; accept a subscription request from the second computing node; and push data to a specified second computing node in time in a case that the calculation of simple characteristic data is finished and there is compound calculation node, that is, in a case that there is the subscription from the second computing node.

In addition, there is a policy for ensuring data security. In general, both the simple characteristic data and the single-machine characteristic data are saved for two copies, one copy on the first computing node and the other copy on a result data caching node. A specific process for saving is determined according to a routing algorithm. In a case that the first computing node is unexpectedly restarted or expanded, the system obtains historical data from a corresponding result data storage node. The characteristic data is stored by compression with a data structure of two hours. Therefore, data within two hours must be complete, so that an integrity of the data is ensured.

In a case that a process, a network, or a machine unexpectedly triggers a redundancy mechanism of a module, a calculation task of the abnormal process is evenly distributed to other processes. Data index information is pushed by the control node. The calculation node obtains data from a configuration system. The process is finished within one minute.

The second computing node is configured to: calculate the compound characteristics, where the calculation is driven by time and one calculation is performed per minute; accept the subscription request from the second computing node itself, and push characteristic data to a specified second computing node in time in a case that the calculation of compound characteristic data is finished and there is a subscription from another second computing node.

In addition, there is a policy for ensuring data security that is the same as the data redundancy policy of the first computing node.

A redundancy mechanism of the second computing node is also the same as the redundancy mechanism of the first computing node, which may refer to a corresponding part of the first computing node for understanding.

A storage node may include a storage node for caching.

The storage node for caching may be for caching data within the latest four hours, data pulling of an external interface, and data localizing storage.

According to the data security policy, the storage node for caching is configured to: save calculation results of the first computing node and the second computing node, and provide the data within two hours to the calculation node in the case that the calculation node is abnormal. The calculation node pushes relevant data to the storage node in the case that the calculation node itself is unexpectedly restarted or expanded, to ensure that each data is stored for two copies.

All data that is used externally is obtained from the storage. In a case that historical data does not exist, data is re-pulled from a storage device and cached.

Because there is a large quantity of data in the system, and there is a high write demand on the storage device, the module slowly localizes data by using the data caching capability. In this way, not only is pressure on an access layer of the storage device reduced, but also there is a redundancy capability facing with an abnormal case of the storage device.

In the present disclosure, a method of breaking up the whole into parts is used, in which a calculation manner using a characteristic tree as a unit is improved to a calculation manner using a single node as a unit, so that the tree construction is not limited by the limited performance of a single machine. An updated characteristic is allocated in real time to a specified calculation node by means of configuration update, thereby addressing the issue of a long effective time period caused by the hundreds of millions of characteristic data. By performing calculations classified according to the type of characteristics, different types of characteristics are decoupled from each other, thereby preventing a mutually interference thereof.

Referring to FIG. 4, an embodiment of a data processing method provided in an embodiment in the present disclosure includes steps 101 to 103.

In step 101, a control node obtains a type and a characteristic identifier of to-be-processed characteristic data, where the type is for identifying a home computing node of the to-be-processed characteristic data, and the home computing node is a first computing node or a second computing node, where the control node is applied to a distributed processing system, the distributed processing system further includes the control node, the first computing node is configured to process characteristic data reported by a terminal and characteristic data allocated by the control node, and the second computing node is configured to process characteristic data generated by the first computing node and the characteristic data allocated by the control node.

In step 102, the control node determines process index information according to the characteristic identifier, where the process index information is for indicating a processing process on the home computing node to which the to-be-processed characteristic data belongs.

In step 103, the control node schedules, according to the process index information, data index information of the to-be-processed characteristic data or the to-be-processed characteristic data to the processing process on the home computing node, where the data index information is for instructing the home computing node to obtain the to-be-processed characteristic data, so that the home computing node processes the to-be-processed characteristic data.

Compared with the characteristic tree processing solution in the conventional art that suffers from long processing duration and limited performance of a single machine, the data processing method provided in this embodiment in the present disclosure adopts a distributed processing manner, in which calculation of characteristic data can be implemented without constructing a characteristic tree, thereby reducing the processing duration. In addition, the characteristic tree does not need to be placed on a single machine for processing, thereby addressing the issue of limited performance of a single machine.

In an embodiment, the distributed processing system further includes a configuration update node, the configuration update node being configured to: store the to-be-processed characteristic data reported by the terminal and monitor update of the to-be-processed characteristic data.

The control node is further configured to receive, in a case that the configuration update node monitors that the to-be-processed characteristic data is updated, the type and the characteristic identifier of the to-be-processed characteristic data that are pushed by the configuration update node.

In an embodiment, the first computing node is configured to process the characteristic data reported by the terminal and the characteristic data allocated by the control node; and push the processed characteristic data to the second computing node according to a subscription request of the second computing node.

In an embodiment, the distributed processing system includes multiple second computing nodes.

One of the multiple second computing nodes is configured to: process the characteristic data pushed by the first computing node and the characteristic data allocated by the control node; and push the processed characteristic data to another second computing node according to a subscription request of the another second computing node.

In an embodiment, the control node is further configured to obtain, in case of determining that the processing process on the home computing node is abnormal, a type and a characteristic identifier of characteristic data processed in the abnormal processing process, as the type and the characteristic identifier of the to-be-processed characteristic data.

In an embodiment, the control node is further configured to determine, according to a correspondence between the characteristic identifier and the process index information, the process index information corresponding to the characteristic identifier.

In an embodiment, the distributed processing system further includes a storage node, where the storage node is configured to store the processed characteristic data.

Stored characteristic data has a data storage format of a version number, bit information, and data content.

In the present disclosure, the data processing method may refer to a corresponding part of the distributed processing system for understanding, and details are not described herein again.

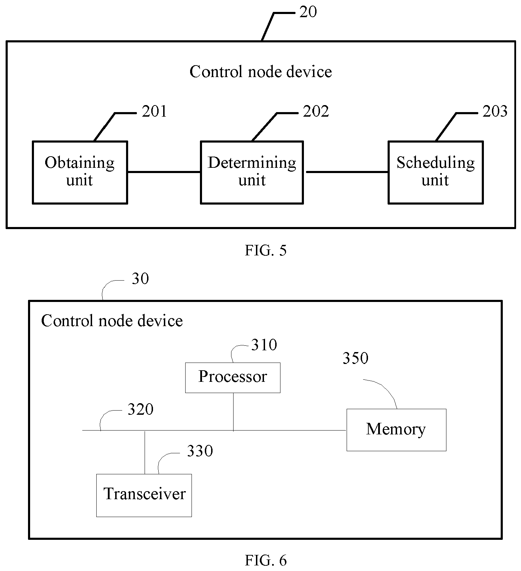

Referring to FIG. 5, a control node device 20 provided in an embodiment in the present disclosure is applied to a distributed processing system. The distributed processing system further includes a first computing node and a second computing node, where the first computing node is configured to process characteristic data reported by a terminal and characteristic data allocated by a control node, and the second computing node is configured to process characteristic data generated by the first computing node and the characteristic data allocated by the control node. The control node device includes an obtaining unit 201, a determining unit 202 and a scheduling unit 203.

The obtaining unit 201 is configured to obtain a type and a characteristic identifier of to-be-processed characteristic data, where the type is for identifying a home computing node of the to-be-processed characteristic data, and the home computing node is the first computing node or the second computing node;

The determining unit 202is configured to determine process index information according to the characteristic identifier obtained by the obtaining unit 201, where the process index information is for indicating a processing process on the home computing node to which the to-be-processed characteristic data belongs; and

The scheduling unit 203is configured to schedule, according to the process index information determined by the determining unit 202, data index information of the to-be-processed characteristic data or the to-be-processed characteristic data to the processing process on the home computing node, where the data index information is for instructing the home computing node to obtain the to-be-processed characteristic data, so that the home computing node processes the to-be-processed characteristic data to obtain processed characteristic data.

Compared with the characteristic tree processing solution in the conventional art that suffers from of having long processing duration and limited performance of a single machine, the control node device provided in this embodiment in the present disclosure adopts a distributed processing manner, in which calculation of characteristic data can be implemented without constructing a characteristic tree, thereby reducing the processing duration. In addition, the characteristic tree does not need to be placed on a single machine for processing, thereby addressing the issue of limited performance of a single machine.

In an embodiment, the obtaining unit 201 is configured to receive, in a case that the configuration update node monitors that the to-be-processed characteristic data is updated, the type and the characteristic identifier of the to-be-processed characteristic data that are pushed by the configuration update node.

In an embodiment, the obtaining unit 201 is configured to obtain, in a case of determining that the processing process on the home computing node is abnormal, a type and a characteristic identifier of characteristic data processed in the abnormal processing process, as the type and the characteristic identifier of the to-be-processed characteristic data.

In an embodiment, the determining unit 202 is configured to determine, according to a correspondence between the characteristic identifier and the process index information, the process index information corresponding to the characteristic identifier.

In an embodiment, the processed characteristic data is stored in a data storage format of a version number, bit information, and data content.

In the present disclosure, the control node device may refer to a corresponding part of the control node in the distributed processing system for understanding, and details are not described herein again.

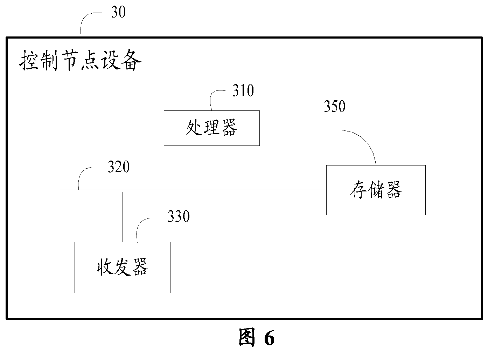

FIG. 6 is a schematic structural diagram of a control node device 30 according to an embodiment in the present disclosure. The control node device 30 is applied to a distributed processing system. The distributed processing system further includes a first computing node and a second computing node, where the first computing node is configured to process characteristic data reported by a terminal and characteristic data allocated by a control node, and the second computing node is configured to process characteristic data generated by the first computing node and the characteristic data allocated by the control node. The control node device 30 includes: a processor 310, a memory 350, and an input/output device 330. The input/output device 330 may include: a mouse, a keyboard, a touchscreen and a display. The memory 350 may include a read-only memory and a random access memory, and provides an operating instruction and data to the processor 310. A part of the memory 350 may further include a non-volatile RAM (NVRAM).

In some implementations, the memory 350 stores the following element: an executable module, or a data structure, or a subset of the executable module and the data structure, or an extension set of the executable module and the data structure.

In an embodiment in the present disclosure, by invoking the operating instruction (the operating instruction may be stored in an operating system) stored in the memory 350, the following operations are implemented:
obtaining a type and a characteristic identifier of to-be-processed characteristic data, where the type is for identifying a home computing node of the to-be-processed characteristic data, and the home computing node is the first computing node or the second computing node;
determining process index information according to the characteristic identifier, where the process index information is for indicating a processing process on the home computing node to which the to-be-processed characteristic data belongs; and
scheduling, according to the process index information, data index information of the to-be-processed characteristic data or the to-be-processed characteristic data to the processing process on the home computing node, where the data index information is for instructing the home computing node to obtain the to-be-processed characteristic data, so that the home computing node processes the to-be-processed characteristic data.

Compared with the characteristic tree processing solution in the conventional art that suffers from of having long processing duration and limited performance of a single machine, the control node device provided in this embodiment in the present disclosure adopts a distributed processing manner, in which calculation of characteristic data can be implemented without constructing a characteristic tree, thereby reducing the processing duration. In addition, the characteristic tree does not need to be placed on a single machine for processing, thereby addressing the issue of limited performance of a single machine.

The processor 310 controls operations of the control node device 30. The processor 310 may be a central processing unit (CPU). The memory 350 may include a read-only memory and a random access memory, and provides an instruction and data to the processor 310. A part of the memory 350 may further include an NVRAM. In practices, all components of the control node device 30 are coupled by a bus system 320, where the bus system 320 may include a data bus, and may further include a power source bus, a control bus, a state signal bus, and the like. For clarity of description, all types of buses in the figure are marked as the bus system 320.

The methods disclosed in the foregoing embodiments in the present disclosure may be applied to the processor 310, or in other words, may be implemented by the processor 310. The processor 310 may be an integrated circuit chip having a signal processing capability. In practices, steps of the foregoing methods may be implemented by using a hardware logical circuit integrated in the processor 310, or an instruction in a form of software. The processor 310 may be a general purpose processor, a digital signal processor (DSP), an application-specific integrated circuit (ASIC), a field programmable gate array (FPGA), a programmable logic component, a discrete gate, a transistor logic device, or a discrete hardware component, and may implement or perform the methods, steps, and logical block diagrams disclosed in the embodiments in the present disclosure. The general purpose processor may be a microprocessor, or any other conventional processor, or the like. The steps of the methods disclosed in the embodiments in the present disclosure may be directly implemented by a hardware decoding processor, or may be implemented by a decoding processor that combines hardware and software modules. The software module may be located in a mature storage medium in the art, such as a random access memory, a flash memory, a read-only memory, a programmable read-only memory, an electrically erasable programmable memory, or a register. The storage medium is located in the memory 350, and the processor 310 reads information in the memory 350 and performs the steps of the foregoing methods in combination with hardware of the processor.

The distributed processing system further includes a configuration update node. The processor 310 is configured to: receive, in a case that the configuration update node monitors that the characteristic data is updated, the type and the characteristic identifier of the to-be-processed characteristic data that are pushed by the configuration update node.

The processor 310 is configured to obtain, in case of determining that the processing process on the home computing node is abnormal, a type and a characteristic identifier of characteristic data processed in the abnormal processing process, as the type and the characteristic identifier of the to-be-processed characteristic data.

The processor 310 is configured to determine, according to a correspondence between the characteristic identifier and the process index information, the process index information corresponding to the characteristic identifier.

The control node device 30 may refer to a corresponding part of the control node in the distributed processing system for understanding, and details are not described herein again.

A person of ordinary skill in the art may understand that all or some of the steps of the methods in the foregoing embodiments may be implemented by a program instructing relevant hardware. The program may be stored in a computer readable storage medium. The storage medium may include a read-only memory (ROM), a random access memory (RAM), a magnetic disk, an optical disc, or the like.

The distributed processing system, the data processing method, and the device provided in the embodiments in the present disclosure are described in detail above. Although the principles and implementations in the present disclosure are described by using specific examples in this specification, the descriptions of the foregoing embodiments are merely intended to help understand the method and the core idea of the method in the present disclosure. Meanwhile, a person of ordinary skill in the art may make modifications to the specific implementations and application range according to the idea in the present disclosure. In conclusion, the content of this specification should not be construed as a limitation to the present disclosure.

## Claims

1. A distributed processing system, comprising: a control node, a first computing node, and a second computing node, wherein the first computing node is configured to process characteristic data reported by a terminal and characteristic data allocated by the control node, and the second computing node is configured to process characteristic data generated by the first computing node and the characteristic data allocated by the control node; wherein
the control node obtains a type and a characteristic identifier of to-be-processed characteristic data, wherein the type is for identifying a home computing node of the to-be-processed characteristic data, and the home computing node is one of the first computing node and the second computing node;
the control node determines process index information according to the characteristic identifier, and the process index information is for indicating a processing process on the home computing node to which the to-be-processed characteristic data belongs;
the control node schedules, according to the process index information, one of data index information of the to-be-processed characteristic data and the to-be-processed characteristic data to the processing process on the home computing node, and the data index information is for instructing the home computing node to obtain the to-be-processed characteristic data; and
the home computing node processes the to-be-processed characteristic data to obtain processed characteristic data;
**characterized in that,**
the distributed processing system further comprises a configuration update node, the configuration update node is configured to: store the to-be-processed characteristic data reported by the terminal and monitor updates of the to-be-processed characteristic data; and
the control node is further configured to receive, in a case that the configuration update node detects that the to-be-processed characteristic data is updated, the type and the characteristic identifier of the to-be-processed characteristic data that are pushed by the configuration update node.

2. The distributed processing system according to claim 1, wherein the first computing node is configured to: process the characteristic data reported by the terminal and the characteristic data allocated by the control node; and push the processed characteristic data to the second computing node according to a subscription request of the second computing node.

3. The distributed processing system according to claim 2, wherein the distributed processing system comprises a plurality of second computing nodes; wherein
one second computing node of the plurality of second computing nodes is configured to: process the characteristic data pushed by the first computing node and the characteristic data allocated by the control node; and push the processed characteristic data to another second computing node according to a subscription request of the another second computing node.

4. The distributed processing system according to claim 1, wherein the control node is further configured to: in a case of determining that the processing process on the home computing node is abnormal, obtain a type and a characteristic identifier of characteristic data processed in the abnormal processing process, as the type and the characteristic identifier of the to-be-processed characteristic data.

5. The distributed processing system according to any one of claims 1 to 4, wherein the control node is further configured to determine, according to a correspondence between a characteristic identifier and process index information, the process index information corresponding to the characteristic identifier.

6. A data processing method, comprising:
obtaining, by a control node, a type and a characteristic identifier of to-be-processed characteristic data, wherein the type is for identifying a home computing node of the to-be-processed characteristic data, the home computing node is one of a first computing node and a second computing node, wherein the first computing node is configured to process characteristic data reported by a terminal and characteristic data allocated by the control node, and the second computing node is configured to process characteristic data generated by the first computing node and the characteristic data allocated by the control node (101);
determining, by the control node, process index information according to the characteristic identifier, wherein the process index information is for indicating a processing process on the home computing node to which the to-be-processed characteristic data belongs (102);
scheduling, by the control node according to the process index information, one of data index information of the to-be-processed characteristic data and the to-be-processed characteristic data to the processing process on the home computing node, wherein the data index information is for instructing the home computing node to obtain the to-be-processed characteristic data (103); and
processing, by the home computing node, the to-be-processed characteristic data to obtain processed characteristic data (103);
**characterized in that,**
the obtaining, by the control node, the type and the characteristic identifier of to-be-processed characteristic data comprises:
receiving, by the control node in a case that a configuration update node detects that the to-be-processed characteristic data is updated, the type and the characteristic identifier of the to-be-processed characteristic data that are pushed by the configuration update node.

7. The method according to claim 6, wherein the obtaining, by the control node, the type and the characteristic identifier of to-be-processed characteristic data comprises:
obtaining, by the control node in a case of determining that the processing process on the home computing node is abnormal, a type and a characteristic identifier of characteristic data processed in the abnormal processing process, as the type and the characteristic identifier of the to-be-processed characteristic data.

8. The method according to claim 6 or 7, wherein the determining, by the control node, process index information according to the characteristic identifier comprises:
determining, by the control node according to a correspondence between the characteristic identifier and the process index information, the process index information corresponding to the characteristic identifier.

9. The method according to claim 6 or 7, wherein the processed characteristic data is stored in a data storage format of a version number, bit information, and data content.

10. A control node device (20), comprising:
an obtaining unit (201), configured to obtain a type and a characteristic identifier of to-be-processed characteristic data, wherein the type is for identifying a home computing node of the to-be-processed characteristic data, the home computing node is one of a first computing node and a second computing node, wherein the first computing node is configured to process characteristic data reported by a terminal and characteristic data allocated by a control node, and the second computing node is configured to process characteristic data generated by the first computing node and the characteristic data allocated by the control node;
a determining unit (202), configured to determine process index information according to the characteristic identifier obtained by the obtaining unit (201), wherein the process index information is for indicating a processing process on the home computing node to which the to-be-processed characteristic data belongs; and
a scheduling unit (203), configured to schedule, according to the process index information determined by the determining unit (202), one of data index information of the to-be-processed characteristic data and the to-be-processed characteristic data to the processing process on the home computing node, wherein the data index information is for instructing the home computing node to obtain the to-be-processed characteristic data, so that the home computing node processes the to-be-processed characteristic data to obtain processed characteristic data;
**characterized in that,**
the obtaining unit (201) is configured to receive, in a case that a configuration update node detects that the to-be-processed characteristic data is updated, the type and the characteristic identifier of the to-be-processed characteristic data that are pushed by the configuration update node.

11. The control node device according to claim 10, wherein
the obtaining unit (201) is configured to obtain, in a case of determining that the processing process on the home computing node is abnormal, a type and a characteristic identifier of characteristic data processed in the abnormal processing process, as the type and the characteristic identifier of the to-be-processed characteristic data.

12. The control node device according to claim 10 or 11, wherein
the determining unit (202) is configured to determine, according to a correspondence between the characteristic identifier and the process index information, the process index information corresponding to the characteristic identifier.

## Patentansprüche

1. Verteiltes Verarbeitungssystem, umfassend: einen Steuerknoten, einen ersten Rechenknoten und einen zweiten Rechenknoten, wobei der erste Rechenknoten ausgelegt ist zum Verarbeiten von Eigenschaftsdaten, die durch ein Endgerät gemeldet wurden, und von Eigenschaftsdaten, die durch den Steuerknoten zugeteilt wurden, und der zweite Rechenknoten ausgelegt ist zum Verarbeiten von Eigenschaftsdaten, die durch den ersten Rechenknoten erzeugt wurden, und der Eigenschaftsdaten, die durch den Steuerknoten zugeteilt wurden; wobei der Steuerknoten eine Art und eine Eigenschaftskennung von zu verarbeitenden Eigenschaftsdaten erlangt, wobei die Art zum Identifizieren eines Heim-Rechenknotens der zu verarbeitenden Eigenschaftsdaten dient, und der Heim-Rechenknoten der erste Rechenknoten oder der zweite Rechenknoten ist;
der Steuerknoten gemäß der Eigenschaftskennung Prozessindexinformationen bestimmt, und wobei die Prozessindexinformationen dazu dienen, einen Verarbeitungsprozess auf dem Heim-Rechenknoten, zu dem die zu verarbeitenden Eigenschaftsdaten gehören, anzugeben;
der Steuerknoten, gemäß den Prozessindexinformationen, Datenindexinformationen der zu verarbeitenden Eigenschaftsdaten oder die zu verarbeitenden Eigenschaftsdaten zu dem Verarbeitungsprozess auf dem Heim-Rechenknoten einplant, und wobei die Datenindexinformationen zum Anweisen des Heim-Rechenknotens, die zu verarbeitenden Eigenschaftsdaten zu erlangen, dienen; und
der Heim-Rechenknoten die zu verarbeitenden Eigenschaftsdaten verarbeitet, um verarbeitete Eigenschaftsdaten zu erlangen;
**dadurch gekennzeichnet, dass**
das verteilte Verarbeitungssystem ferner einen Konfigurationsaktualisierungsknoten umfasst, wobei der Konfigurationsaktualisierungsknoten ausgelegt ist zum:
Speichern der zu verarbeitenden Eigenschaftsdaten, die durch das Endgerät gemeldet werden, und Überwachen von Aktualisierungen der zu verarbeitenden Eigenschaftsdaten; und
der Steuerknoten ferner ausgelegt ist zum Empfangen, in einem Falle, dass der Konfigurationsaktualisierungsknoten detektiert, dass die zu verarbeitenden Eigenschaftsdaten aktualisiert sind, der Art und der Eigenschaftskennung der zu verarbeitenden Eigenschaftsdaten, die durch den Konfigurationsaktualisierungsknoten gepusht wurden.

2. Verteiltes Verarbeitungssystem nach Anspruch 1, wobei der erste Rechenknoten ausgelegt ist zum:
Verarbeiten der Eigenschaftsdaten, die durch das Endgerät gemeldet werden, und der Eigenschaftsdaten, die durch den Steuerknoten zugeteilt werden; und Pushen der verarbeiteten Eigenschaftsdaten an den zweiten Steuerknoten gemäß einer Abonnementanfrage des zweiten Rechenknotens.

3. Verteiltes Verarbeitungssystem nach Anspruch 2, wobei das verteilte Verarbeitungssystem eine Vielzahl von zweiten Rechenknoten umfasst; wobei
ein zweiter Rechenknoten der Vielzahl von zweiten Rechenknoten ausgelegt ist zum: Verarbeiten der durch den ersten Rechenknoten gepushten Eigenschaftsdaten und der durch den Steuerknoten zugeteilten Eigenschaftsdaten; und Pushen der verarbeiteten Eigenschaftsdaten an einen anderen zweiten Rechenknoten gemäß einer Abonnementanfrage des anderen zweiten Rechenknotens.

4. Verteiltes Verarbeitungssystem nach Anspruch 1, wobei der Steuerknoten ferner ausgelegt ist zum: in einem Fall des Bestimmens, dass der Verarbeitungsprozess auf dem Heim-Rechenknoten anomal ist, Erlangen einer Art und einer Eigenschaftskennung von in dem anomalen Verarbeitungsprozess verarbeiteten Eigenschaftsdaten als die Art und die Eigenschaftskennung der zu verarbeitenden Eigenschaftsdaten.

5. Verteiltes Verarbeitungssystem nach einem der Ansprüche 1 bis 4, wobei der Steuerknoten ferner ausgelegt ist zum Bestimmen, gemäß einer Entsprechung zwischen einer Eigenschaftskennung und Prozessindexinformationen, der der Eigenschaftskennung entsprechenden Prozessindexinformationen.

6. Datenverarbeitungsverfahren, das Folgendes umfasst:
Erlangen, durch einen Steuerknoten, einer Art und einer Eigenschaftskennung von zu verarbeitenden Eigenschaftsdaten, wobei die Art zum Identifizieren eines Heim-Rechenknotens der zu verarbeitenden Eigenschaftsdaten dient, und der Heim-Rechenknoten ein erster Rechenknoten oder ein zweiter Rechenknoten ist, wobei der erste Rechenknoten ausgelegt ist zum Verarbeiten von Eigenschaftsdaten, die durch ein Endgerät gemeldet wurden, und von Eigenschaftsdaten, die durch den Steuerknoten zugeteilt wurden, und der zweite Rechenknoten ausgelegt ist zum Verarbeiten von Eigenschaftsdaten, die durch den ersten Rechenknoten erzeugt wurden, und der Eigenschaftsdaten, die durch den Steuerknoten zugeteilt wurden (101);
Bestimmen, durch den Steuerknoten, von Prozessindexinformationen gemäß der Eigenschaftskennung, wobei die Prozessindexinformationen dazu dienen, einen Verarbeitungsprozess auf dem Heim-Rechenknoten, zu dem die zu verarbeitenden Eigenschaftsdaten gehören, anzugeben (102);
Einplanen, durch den Steuerknoten gemäß den Prozessindexinformationen, von Datenindexinformationen der zu verarbeitenden Eigenschaftsdaten oder der zu verarbeitenden Eigenschaftsdaten zu dem Verarbeitungsprozess auf dem Heim-Rechenknoten, wobei die Datenindexinformationen zum Anweisen des Heim-Rechenknotens, die zu verarbeitenden Eigenschaftsdaten zu erlangen, dienen (103); und
Verarbeiten, durch den Heim-Rechenknoten, der zu verarbeitenden Eigenschaftsdaten, um verarbeitete Eigenschaftsdaten zu erlangen (103);
**dadurch gekennzeichnet, dass**
das Erlangen, durch den Steuerknoten, der Art und der Eigenschaftskennung der zu verarbeitenden Eigenschaftsdaten Folgendes umfasst:
Empfangen, durch den Steuerknoten, in einem Falle, dass ein Konfigurationsaktualisierungsknoten detektiert, dass die zu verarbeitenden Eigenschaftsdaten aktualisiert sind, der Art und der Eigenschaftskennung der zu verarbeitenden Eigenschaftsdaten, die durch den Konfigurationsaktualisierungsknoten gepusht werden.

7. Verfahren nach Anspruch 6, wobei das Erlangen, durch den Steuerknoten, der Art und der Eigenschaftskennung der zu verarbeitenden Eigenschaftsdaten Folgendes umfasst:
Erlangen, durch den Steuerknoten, in einem Fall des Bestimmens, dass der Verarbeitungsprozess auf dem Heim-Rechenknoten anomal ist, einer Art und einer Eigenschaftskennung von in dem anomalen Verarbeitungsprozess verarbeiteten Eigenschaftsdaten als die Art und die Eigenschaftskennung der zu verarbeitenden Eigenschaftsdaten.

8. Verfahren nach Anspruch 6 oder 7, wobei das Bestimmen, durch den Steuerknoten, von Prozessindexinformationen gemäß der Eigenschaftskennung Folgendes umfasst:
Bestimmen, durch den Steuerknoten gemäß einer Entsprechung zwischen der Eigenschaftskennung und den Prozessindexinformationen, der der Eigenschaftskennung entsprechenden Prozessindexinformationen.

9. Verfahren nach Anspruch 6 oder 7, wobei die verarbeiteten Eigenschaftsdaten in einem Datenspeicherungsformat einer Versionsnummer, von Bitinformationen und Dateninhalt gespeichert wird.

10. Steuerknotenvorrichtung (20), die Folgendes umfasst:
eine Erlangeeinheit (201), ausgelegt zum Erlangen einer Art und einer Eigenschaftskennung von zu verarbeitenden Eigenschaftsdaten, wobei die Art zum Identifizieren eines Heim-Rechenknotens der zu verarbeitenden Eigenschaftsdaten dient, und der Heim-Rechenknoten ein erster Rechenknoten oder ein zweiter Rechenknoten ist, wobei der erste Rechenknoten ausgelegt ist zum Verarbeiten von Eigenschaftsdaten, die durch ein Endgerät gemeldet wurden, und von Eigenschaftsdaten, die durch einen Steuerknoten zugeteilt wurden, und der zweite Rechenknoten ausgelegt ist zum Verarbeiten von Eigenschaftsdaten, die durch den ersten Rechenknoten erzeugt wurden, und der Eigenschaftsdaten, die durch den Steuerknoten zugeteilt wurden;
eine Bestimmungseinheit (202), ausgelegt zum Bestimmen von Prozessindexinformationen gemäß der durch die Erlangeeinheit (201) erlangten Eigenschaftskennung, wobei die Prozessindexinformationen dazu dienen, einen Verarbeitungsprozess auf dem Heim-Rechenknoten, zu dem die zu verarbeitenden Eigenschaftsdaten gehören, anzugeben;
eine Einplanungseinheit (203), ausgelegt zum Einplanen, gemäß den durch die Bestimmungseinheit (202) bestimmten Prozessindexinformationen, von Datenindexinformationen der zu verarbeitenden Eigenschaftsdaten oder der zu verarbeitenden Eigenschaftsdaten zu dem Verarbeitungsprozess auf dem Heim-Rechenknoten, wobei die Datenindexinformationen zum Anweisen des Heim-Rechenknotens, die zu verarbeitenden Eigenschaftsdaten zu erlangen, dienen, so dass der Heim-Rechenknoten die zu verarbeitenden Eigenschaftsdaten verarbeitet, um verarbeitete Eigenschaftsdaten zu erlangen;
**dadurch gekennzeichnet, dass**
die Erlangeeinheit (201) ausgelegt ist zum Empfangen, in einem Falle, dass ein Konfigurationsaktualisierungsknoten detektiert, dass die zu verarbeitenden Eigenschaftsdaten aktualisiert sind, der Art und der Eigenschaftskennung der zu verarbeitenden Eigenschaftsdaten, die durch den Konfigurationsaktualisierungsknoten gepusht werden.

11. Steuerknotenvorrichtung nach Anspruch 10, wobei
die Erlangeeinheit (201) ausgelegt ist zum Erlangen, in einem Fall des Bestimmens, dass der Verarbeitungsprozess auf dem Heim-Rechenknoten anomal ist, einer Art und einer Eigenschaftskennung von in dem anomalen Verarbeitungsprozess verarbeiteten Eigenschaftsdaten als die Art und die Eigenschaftskennung der zu verarbeitenden Eigenschaftsdaten.

12. Steuerknotenvorrichtung nach Anspruch 10 oder 11, wobei
die Bestimmungseinheit (202) ausgelegt ist zum Bestimmen, gemäß einer Entsprechung zwischen der Eigenschaftskennung und den Prozessindexinformationen, der der Eigenschaftskennung entsprechenden Prozessindexinformationen.

## Revendications

1. Système de traitement distribué, comprenant : un nœud de commande, un premier nœud de calcul et un deuxième nœud de calcul, le premier nœud de calcul étant configuré pour traiter des données caractéristiques rapportées par un terminal et des données caractéristiques attribuées par le nœud de commande, et le deuxième nœud de calcul étant configuré pour traiter des données caractéristiques générées par le premier nœud de calcul et les données caractéristiques attribuées par le nœud de commande ; dans lequel
le nœud de commande obtient un type et un identifiant caractéristique de données caractéristiques à traiter, le type servant à identifier un nœud de calcul domestique des données caractéristiques à traiter, et le nœud de calcul domestique étant soit le premier nœud de calcul, soit le deuxième nœud de calcul ;
le nœud de commande détermine des informations d'index de processus en fonction de l'identifiant caractéristique, et les informations d'index de processus servent à indiquer un processus de traitement sur le nœud de calcul domestique auquel les données caractéristiques à traiter appartiennent ;
le nœud de commande programme, en fonction des informations d'index de processus, un élément parmi des informations d'index de données des données caractéristiques à traiter et les données caractéristiques à traiter pour le processus de traitement du nœud de calcul domestique, et les informations d'index de données servent à ordonner au nœud de calcul domestique d'obtenir les données caractéristiques à traiter ; et
le nœud de calcul domestique traite les données caractéristiques à traiter pour obtenir des données caractéristiques traitées ;
**caractérisé en ce que**
le système de traitement distribué comprend également un nœud de mise à jour de configuration, le nœud de mise à jour de configuration étant configuré pour :
stocker les données caractéristiques à traiter rapportées par le terminal et surveiller des mises à jour des données caractéristiques à traiter ; et
le nœud de commande étant également configuré pour recevoir, dans le cas où le nœud de mise à jour de configuration détecte que les données caractéristiques à traiter sont mises à jour, le type et l'identifiant caractéristique des données caractéristiques à traiter qui sont poussées par le nœud de mise à jour de configuration.

2. Système de traitement distribué selon la revendication 1, dans lequel le premier nœud de calcul est configuré pour : traiter les données caractéristiques rapportées par le terminal et les données caractéristiques attribuées par le nœud de commande ; et pousser les données caractéristiques traitées vers le deuxième nœud de calcul selon une demande d'abonnement du deuxième nœud de calcul.

3. Système de traitement distribué selon la revendication 2, le système de traitement distribué comprenant une pluralité de deuxièmes nœuds de calcul ; dans lequel
un deuxième nœud de calcul de la pluralité de deuxièmes nœuds de calcul est configuré pour : traiter les données caractéristiques poussées par le premier nœud de calcul et les données caractéristiques attribuées par le nœud de commande ; et pousser les données caractéristiques traitées vers un autre deuxième nœud de calcul selon une demande d'abonnement dudit un autre deuxième nœud de calcul.

4. Système de traitement distribué selon la revendication 1, dans lequel le nœud de commande est également configuré pour : dans le cas où il est déterminé que le processus de traitement du nœud de calcul domestique est anormal, obtenir un type et un identifiant caractéristique de données caractéristiques traitées dans le processus de traitement anormal, comme type et identifiant caractéristique des données caractéristiques à traiter.

5. Système de traitement distribué selon l'une quelconque des revendications 1 à 4, dans lequel le nœud de commande est également configuré pour déterminer, en fonction d'une correspondance entre un identifiant caractéristique et des informations d'index de processus, les informations d'index de processus correspondant à l'identifiant caractéristique.

6. Procédé de traitement de données, comprenant les étapes consistant à :
obtenir, par un nœud de commande, un type et un identifiant caractéristique de données caractéristiques à traiter, le type servant à identifier un nœud de calcul domestique des données caractéristiques à traiter, le nœud de calcul domestique étant soit un premier nœud de calcul, soit un deuxième nœud de calcul, le premier nœud de calcul étant configuré pour traiter des données caractéristiques rapportées par un terminal et des données caractéristiques attribuées par le nœud de commande, et le deuxième nœud de calcul étant configuré pour traiter des données caractéristiques générées par le premier nœud de calcul et les données caractéristiques attribuées par le nœud de commande (101) ;
déterminer, par le nœud de commande, des informations d'index de processus en fonction de l'identifiant caractéristique, les informations d'index de processus servant à indiquer un processus de traitement sur le nœud de calcul domestique auquel les données caractéristiques à traiter appartiennent (102) ;
programmer, par le nœud de commande en fonction des informations d'index de processus, un élément parmi des informations d'index de données des données caractéristiques à traiter et les données caractéristiques à traiter pour le processus de traitement du nœud de calcul domestique, les informations d'index de données servant à ordonner au nœud de calcul domestique d'obtenir les données caractéristiques à traiter (103) ; et
traiter, par le nœud de calcul domestique, les données caractéristiques à traiter pour obtenir des données caractéristiques traitées (103) ;
**caractérisé en ce que**
l'obtention, par le nœud de commande, du type et de l'identifiant caractéristique des données caractéristiques à traiter comprend l'étape consistant à :
recevoir, par le nœud de commande dans le cas où un nœud de mise à jour de configuration détecte que les données caractéristiques à traiter sont mises à jour, le type et l'identifiant caractéristique des données caractéristiques à traiter qui sont poussées par le nœud de mise à jour de configuration.

7. Procédé selon la revendication 6, dans lequel l'obtention, par le nœud de commande, du type et de l'identifiant caractéristique des données caractéristiques à traiter comprend l'étape consistant à :
obtenir, par le nœud de commande dans le cas où il est déterminé que le processus de traitement du nœud de calcul domestique est anormal, un type et un identifiant caractéristique de données caractéristiques traitées dans le processus de traitement anormal, comme type et identifiant caractéristique des données caractéristiques à traiter.

8. Procédé selon la revendication 6 ou 7, dans lequel la détermination, par le nœud de commande, d'informations d'index de processus en fonction de l'identifiant caractéristique comprend l'étape consistant à :
déterminer, par le nœud de commande en fonction d'une correspondance entre l'identifiant caractéristique et les informations d'index de processus, les informations d'index de processus correspondant à l'identifiant caractéristique.

9. Procédé selon la revendication 6 ou 7, dans lequel les données caractéristiques traitées sont stockées dans un format de stockage de données parmi un numéro de version, des informations binaires et un contenu de données.

10. Dispositif de nœud de commande (20), comprenant :
une unité d'obtention (201), configurée pour obtenir un type et un identifiant caractéristique de données caractéristiques à traiter, le type servant à identifier un nœud de calcul domestique des données caractéristiques à traiter, le nœud de calcul domestique étant soit un premier nœud de calcul, soit un deuxième nœud de calcul, le premier nœud de calcul étant configuré pour traiter des données caractéristiques rapportées par un terminal et des données caractéristiques attribuées par un nœud de commande, et le deuxième nœud de calcul étant configuré pour traiter des données caractéristiques générées par le premier nœud de calcul et les données caractéristiques attribuées par le nœud de commande ;
une unité de détermination (202), configurée pour déterminer des informations d'index de processus en fonction de l'identifiant caractéristique obtenu par l'unité d'obtention (201), les informations d'index de processus servant à indiquer un processus de traitement sur le nœud de calcul domestique auquel les données caractéristiques à traiter appartiennent ; et
une unité de programmation (203), configurée pour programmer, en fonction des informations d'index de processus déterminées par l'unité de détermination (202), un élément parmi des informations d'index de données des données caractéristiques à traiter et les données caractéristiques à traiter pour le processus de traitement du nœud de calcul domestique, les informations d'index de données servant à ordonner au nœud de calcul domestique d'obtenir les données caractéristiques à traiter, afin que le nœud de calcul domestique traite les données caractéristiques à traiter pour obtenir des données caractéristiques traitées ;
**caractérisé en ce que**
l'unité d'obtention (201) est configurée pour recevoir, dans le cas où un nœud de mise à jour de configuration détecte que les données caractéristiques à traiter sont mises à jour, le type et l'identifiant caractéristique des données caractéristiques à traiter qui sont poussées par le nœud de mise à jour de configuration.

11. Dispositif de nœud de commande selon la revendication 10, dans lequel
l'unité d'obtention (201) est configurée pour obtenir, dans le cas où il est déterminé que le processus de traitement du nœud de calcul domestique est anormal, un type et un identifiant caractéristique de données caractéristiques traitées dans le processus de traitement anormal, comme type et identifiant caractéristique des données caractéristiques à traiter.

12. Dispositif de nœud de commande selon la revendication 10 ou 11, dans lequel
l'unité de détermination (202) est configurée pour déterminer, en fonction d'une correspondance entre l'identifiant caractéristique et les informations d'index de processus, les informations d'index de processus correspondant à l'identifiant caractéristique.
